# EUROPÄISCHE PATENTSCHRIFT

(11) **EP 0 906 897 B1**
(45) Veröffentlichungstag und Bekanntmachung des Hinweises auf die Patenterteilung: **16.05.2001**
(21) Anmeldenummer: 98117045.9
(22) Anmeldetag: 09.09.1998
(51) Int. Cl.: C04B 41/86, C03C 8/14

(54) **Verfahren zur Herstellung von Geschirrdekoren mit erhöhter Widerstandsfähigkeit gegen Besteckabriebspuren und Mittel hierfür**
Process for the preparation of decorations on kitchen ustensils with improved resistance against abrasion by cutlery and composition therefor
Procédé pour la préparation de décors présentant une résistance améliorée à l'abrasion par des couverts et compositon pour sa mise en oeuvre

(30) Priorität: 04.10.1997 DE 19743851
(43) Veröffentlichungstag der Anmeldung: 07.04.1999
(73) Patentinhaber: dmc2 Degussa Metals Catalysts Cerdec AG, 60287 Frankfurt am Main (DE)
(72) Erfinder: Speer, Dietrich, Dr., 63505 Langenselbold (DE); Huber, Adalbert, Dr., 63225 Langen (DE); Dorer, Kai, 63150 Heusenstamm (DE); Wachowitz, Gabriele, 63128 Dietzenbach (DE)

(56) Entgegenhaltungen:
- EP-A- 0 460 863
- US-A- 5 326 728

## Beschreibung

Die Erfindung betrifft ein Verfahren zur Herstellung von Geschirrdekoren mit erhöhter Widerstandsfähigkeit gegen Besteckabriebsspuren und Mittel hierfür, wobei es sich bei dem Mittel um eine im Verfahren zu verwendende Dekorfarbe mit der erfindungsgemäßen Eigenschaftskombination handelt.

Die Herstellung von farbigen Dekoren auf keramischen Materialien, wie zum Beispiel Geschirr aus Steingut, Bone China und Porzellan, ist an sich bekannt (siehe Ullmann's Enzyklopädie der technischen Chemie, 4. Auflage, Band 14 (1977), Seiten 9-10). Mittels unterschiedlichster Applikationstechniken, wie Malen, Tauchen, Spritzen, insbesondere aber direktes oder indirektes Bedrucken, wird eine Dekorfarbe in Form des Dekors auf das zu dekorierende Material aufgebracht und dann eingebrannt.

Die Dekorfarbe besteht im wesentlichen aus einem Pigment und einem Glasfluß aus üblicherweise einer oder mehreren Glasfritten. Bei Geschirrdekoren wird zwischen Aufglasur- und Inglasurdekoration unterschieden: Nach dem Glasurbrand wird auf dem zu dekorierenden Geschirrteil meistens mittels Direktdruck oder per Indirektdruck (Abziehbildtechnik) das Dekor aufgetragen und dann im Falle einer Aufglasurdekoration im Normalbrand bei etwa 780 bis 900 °C oder im Hochtemperaturschnellbrand bei über 900 °C bis etwa 1100 °C und im Falle einer Inglasurdekoration bei einer Temperatur im Bereich von etwa 1100 bis 1250 °C eingebrannt.

Porzellangeschirr, insbesondere Hotelporzellan, ist hohen Beanspruchungen durch alkalisches Spülwasser von Spülmaschinen und durch Besteckeinwirkung im Gebrauch ausgesetzt. Durch Besteckeinwirkung auf dekorierten Geschirrteilen kommt es zu grauen Abriebsspuren, welche den ästhetischen Eindruck stören. Derartige Abriebsspuren vom Metallbesteck sind insbesondere bei vom Markt zunehmend gewünschten großflächigen Dekoren störend. Das Problem konnte bisher nur teilweise durch eine Inglasurdekoration, wobei das Dekor beim Brand teilweise in die Glasurschicht einsinkt, gelöst werden. Eine darüber hinausgehende technische Lehre, wie die Abriebsspuren vermindert werden könnten, war bisher nicht bekannt.

Aufgabe der Erfindung ist demgemäß, Wege aufzuzeigen, die Widerstandsfähigkeit von Dekoren gegen Besteckabriebsspuren zu erhöhen.

Es wurde festgestellt, daß es durch eine spezielle Eigenschaftskombination zwischen (i) dem mittleren Korndurchmesser des Pigments, (ii) der Dichte des Flusses und (iii) der Halbkugeltemperatur (HKP) des Flusses möglich ist, Besteckabriebsspuren auf dem im Bereich von 1000 bis 1250 °C eingebrannten Dekor ganz oder zumindest weitgehend zu vermeiden. Gelöst wird demgemäß die Aufgabe durch ein Verfahren zur Herstellung von Geschirrdekoren mit erhöhter Widerstandsfähigkeit gegen Besteckabriebsspuren, umfassend Aufbringen einer ein Pigment und einen Glasfluß enthaltenden Dekorfarbe auf das Geschirr und Einbrennen des Dekors bei einer Temperatur im Bereich von 1000 bis 1250 °C, das dadurch gekennzeichnet ist, daß man eine Dekorfarbe verwendet, deren Pigment einen mittleren Korndurchmesser d₅₀ von gleich oder kleiner 2 µm und deren Glasfluß eine Dichte von gleich oder kleiner 2,6 g/cm³ und eine Halbkugeltemperatur von kleiner 930 °C aufweist, bestimmt unter dem Erhitzungsmikroskop an einem Prüfkörper aus verpresstem Glasfluss mit einem Durchmesser von 3 mm und einer Höhe von 3 mm bei konstanter Aufheizgeschwindigkeit von 10 °C/min, wobei bei der Halbkugeltemperatur der Radius der Basisfläche des Prüfkörpers seiner Höhe entspricht.

Es wird vermutet, daß die Abriebsspuren durch aus der Oberfläche des eingebrannten Dekors ragende Pigmentkristalle verursacht werden. Ein alleiniges Aufmahlen des Pigments auf d₅₀-Werte auf oder unter 2 µm führte aber selbst bei d₉₀-Werten um/unter 5 µm in vielen Fällen nicht zu einer befriedigenden Erhöhung der Widerstandsfähigkeit gegen Besteckabriebsspuren. Es bedurfte somit weiterer Maßnahmen, das Auftreten von Abriebsspuren ausreichend zu mindern.

Eine Minderung des Auftretens von Abriebsspuren gelingt, wenn zusätzlich zur Verwendung eines feingemahlenen Pigments ein Glasfluß mit einer anspruchsgemäßen Dichte und Halbkugeltemperatur verwendet wird. Eine niedrige Halbkugeltemperatur bei gleichzeitig hoher Dichte führt nicht zum angestrebten Effekt. Es wird angenommen, daß durch die anspruchsgemäße Eigenschaftskombination die Pigmentpartikel in die Dekorschicht einsinken können, so daß die für den Besteckabrieb und die Abriebsspuren auf dem Dekor verantwortliche Pigmentkonzentration an der Dekoroberfläche gering ist.

Hinsichtlich der Dichte des im wesentlichen aus einer oder mehreren Glasfritten bestehenden Glasflusses kommen solche Zusammensetzungen in Betracht, welche Oxide schwerer Elemente, wie solche von Barium, Lanthan, Lanthanoiden, Tantal, Blei und Wismut, entweder nicht oder nur in geringer Konzentration enthalten. Vorzugsweise besteht der Fluß aus bleifreien Glasfritten. Die Halbkugeltemperatur, auch Halbkugelpunkt (HKP) genannt, wird dem Zustand des Prüfkörpers zugeordnet, in dem der Radius einer Basisfläche gleich seiner Höhe ist; die Bestimmung des HKP erfolgt unter dem Erhitzungsmikroskop, wobei ein zylindrischer, durch Verpressen des Glaspulvers entstandener Prüfkörper (3 mm Durchmesser und 3 mm Höhe) mit konstanter Geschwindigkeit (10 °C/Min) aufgeheizt wird.

Vorzugsweise ist die Halbkugeltemperatur niedriger als 900 °C, insbesondere gleich oder niedriger als 880 °C.

Das Aufbringen des Dekors auf das Geschirr umfaßt dem Fachmann bekannte Maßnahmen, nämlich das Anpasten der Dekorfarbe, den direkten oder indirekten Druck und den Brand. Vorzugsweise wird das Dekor auf glasiertes Porzellan aufgebracht und bei einer Temperatur im Bereich von 1000 bis 1250 °C, insbesondere 1100 bis 1250 °C, eingebrannt.

Bei den erfindungsgemäßen Mitteln handelt es sich um Dekorfarben mit der zuvor beschriebenen Eigenschaftskombination.

Ein wesentlicher Vorteil der Erfindung ist die hohe Widerstandsfähigkeit gegen Besteckabriebsspuren, so daß auch nach intensivem Gebrauch der Glanz des Dekors des Geschirrs ganz oder weitgehend erhalten bleibt. Ein weiterer Vorteil besteht darin, daß überraschenderweise ohne Minderung der Widerstandsfähigkeit gegen Abriebsspuren die Pigmentvolumenkonzentration (PVK) und damit die Intensität der Farbe des Dekors erhöht werden kann (PVK gemäß H.G. Völz in Industrial Color Testing, VCH, Weinheim (1995), 133-134).

### Beispiele - allgemeine Vorschriften

Die zu untersuchenden Testplatten wurden wie folgt hergestellt:
1. Aufmahlen der Dekorfarbe in einem Ethanol/Acetongemisch in einer Bloch-Rosetti-Mühle - 120 Minuten, 50 g Mahlgut, 150 g Mahlkugeln.
2. Anpasten der Dekorfarbe in einem Druckmedium (Nr. 80820 der Cerdec AG) - 10 Gew.-teile Dekorfarbe und 6 Gew.-teile Medium.
3. Drucken auf Abziehbildpapier mittels 100er Nylonsieb; überfilmen.
4. Dekorieren von Porzellantellern mittels Abziehbildern.
5. Brennen: Durchschubofen, 90 Minuten, 1140 °C beziehungsweise 1220 °C.

Geprüft wurden (i) die Spülmaschinenbeständigkeit und (ii) die Widerstandsfähigkeit gegen Besteckabrieb (Abriebstest) :
(i): 500 Spülzyklen nach DIN 50275 unter Verwendung eines Reinigers gemäß DIN 44990. Bewertung: 5 = keine Glanzminderung, 4 = geringe Glanzminderung, 3 = leicht matt glänzend, 2 = matt glänzend, 1 = steinmatt, glanzlos.
(ii): Die Klinge eines Chromstahlmessers (18 % Cr) wird 5mal flach schabend über die Dekorfläche geführt; Art und Stärke des Metallabriebs werden bewertet:
   5 = keine Abriebsspuren, 4 = abwischbare
   Abriebsspuren, 3 = durch Abwischen nicht vollständig entfernbare Abriebsspuren, 2 = starke, nicht entfernbare Abriebsspuren, 1 = sehr starke, nicht entfernbare Abriebsspuren.

Die nachfolgende Tabelle enthält Angaben zur Halbkugeltemperatur oder Halbkugelpunkt (HKP in °C) bezeichneten Glasfluß-Stoffeigenschaften, zur Dichte und zu den Hauptkomponenten (in Gew.-%) der in Form von Glasfritten eingesetzen Glasflüsse.

| | A | B | C | D | E | F | G |
|---|---|---|---|---|---|---|---|
| HKP (°C) | 810 | 880 | 820 | 450 | 830 | 780 | 940 |
| Dichte (g/cm³) | 2,47 | 3,34 | 2,53 | 7,78 | 2,93 | 4,75 | 2,51 |
| PbO | 0 | 32,5 | 0 | 82,7 | 24,5 | 66,3 | 0 |
| SiO₂ | 55,6 | 41,1 | 50,3 | 2,3 | 46,1 | 33,4 | 59,0 |
| B₂O₃ | 19,1 | 9,5 | 20,7 | 13,4 | 15,3 | | 12,0 |
| Al₂O₃ | 5,6 | 5,5 | 7,6 | | 5,8 | 0,3 | 9,0 |
| R₂O (R=Na,K,Li) | 14,0 | 2,9 | 9,6 | | 8,1 | | 10,5 |
| R'O (R'=Ca,Sr, Ba,Zn) | 0,5 | 8,4 | 3,4 | 1,6 | | | 9,3 |
| ZrO₂ | 4,3 | | 4,6 | | | | |

### Beispiel 1 (B1) und Vergleichsbeispiel 1 (VB1)

Die weißen Dekorfarben enthielten als Pigment CeO₂ mit d₅₀ = 1,3 µm, d₉₀ = 4,3 µm und einer Dichte von 7,1 g/cm³. Die Dekore wurden in bekannter Weise über Abziehbilder auf Porzellanteller aufgebracht und bei 1140 °C beziehungsweise 1220 °C gebrannt. Die eingesetzten Flüsse, die Pigmentvolumenkonzentration (PVK) und Ergebnisse der Spülmaschinenbeständigkeit und Beständigkeit gegen Besteckabriebsspuren (= Abriebstests) folgen aus der Tabelle.

| | | B 1 | VB 1 |
|---|---|---|---|
| PVK (%) | | 13 | 11 |
| Fluß: | Typ | A | Gemisch aus E und F (Gew.verhält. 3,8 : 1) |
| | HKP (°C) | 810 | E = 830, F = 780 |
| | Dichte (g/cm³) | 2,47 | 3,0 |
| Spülmaschinenbeständigkeit *) | | 4 / 4 | 2 / 3 |
| Abriebstest *) | | 4 / 4 | 2 / 2 |

| | | | |
|---|---|---|---|
| *) Werte bei Brenntemperatur von 1140 °C / 1220 °C | | | |

Die vergleichenden Versuche zeigen, daß ein niedriger Wert für den HKP allein nicht ausreicht, um Abriebsspuren weitgehend zu vermeiden, sondern daß zusätzlich die Dichte des Flusses unterhalb des anspruchsgemäßen Grenzwertes liegen muß.

### Beispiel 2 (B2) und Vergleichsbeispiel 2 (VB2)

Die weißen Dekorfarben enthielten als Pigment Zinnoxid mit d₅₀ = 0,64 µm, d₉₀ = 7,04 µm und einer Dichte von 7,04 g/cm³. Die Flüsse, PVK und Ergebnisse der Tests nach dem Brand bei 1140 °C / 1220 °C folgen aus der Tabelle.

| | | B 2 | VB 2 |
|---|---|---|---|
| PVK (%) | | 15 | 10 |
| Fluß: | Typ | A | B |
| | HKP (°C) | 810 | 880 |
| | Dichte (g/cm³) | 2,47 | 3,34 |
| Spülmaschinenbeständigkeit *) | | 4,5 / 5 | 4,5 / 5 |
| Abriebstest *) | | 5 / 5 | 3 / 3 |

| | | | |
|---|---|---|---|
| *) Brand bei 1140 beziehungsweise 1220 °C | | | |

Das Beispiel B2 zeigt, daß es durch die Verwendung eines Flusses mit einem HKP unter 900 °C und einer Dichte unter 2,6 g/cm³ möglich ist, die PVK und damit die Intensität des Dekors zu erhöhen, und dennoch gegenüber VB2 eine Erhöhung der Widerstandsfähigkeit gegen Besteckabriebsspuren zu erlangen.

### Beispiel 3 (B3) und Vergleichsbeispiel 3 (VB3)

Die grünen Dekorfarben enthielten als Pigment Chromoxid mit d₅₀ = 0,73 µm, d₉₀ = 2,4 µm und einer Dichte von 5,2 g/cm³. Die Tabelle enthält die Angaben analog Beispiel 1.

| | | B 3 | VB 3 |
|---|---|---|---|
| PVK (%) | | 10 | 10 |
| Fluß: | Typ | A | G |
| | HKP (°C) | 810 | 940 |
| | Dichte (g/cm³) | 2,47 | 2,51 |
| Spülmaschinenbeständigkeit *) | | 5 / 5 | 3 / 2 |
| Abriebstest *) | | 5 / 5 | 2 / 2 |

| | | | |
|---|---|---|---|
| *) Brand bei 1140 beziehungsweise 1220 °C | | | |

Der Vergleich von B3 mit VB3 zeigt, daß der HKP einen starken Einfluß auf die Widerstandsfähgkeit gegen Abriebsspuren aufweist, und zwar auch dann, wenn im Beispiel und Vergleichsbeispiel eine bleifreie Fritte mit nahezu gleicher Dichte zum Einsatz gelangt.

### Beispiel 4 (B4) und Vergleichsbeispiel 4 (VB4)

Die gelben Dekorfarben enthielten ein Rutilpigment (Sicotan 1010 der Fa. Bayer AG) mit d₅₀ = 1,02 µm, d₉₀ = 2,0 µm und einer Dichte von 4,5 g/cm³. Die Tabelle enthält die Angaben analog zu Beispiel 1.

| | | B 4 | VB 4 |
|---|---|---|---|
| PVK (%) | | 30 | 30 |
| Fluß: | Typ | A | D |
| | HKP (°C) | 810 | 450 |
| | Dichte (g/cm³) | 2,47 | 7,78 |
| Spülmaschinenbeständigkeit *) | | 5 / 5 | 4,5 / 4,5 |
| Abriebstest *) | | 5 / 5 | 4,5 / 3 |

| | | | |
|---|---|---|---|
| *) Brand bei 1140 beziehungsweise 1220 °C | | | |

Aus dem Vergleich folgt, daß ein Fluß mit einem sehr niedrigen Wert für HKP das Auftreten von Abriebsspuren nicht vermindert, wenn die Dichte oberhalb des anspruchsgemäßen Grenzwerts liegt.

### Beispiel 5 (B5) und Vergleichsbeispiel 5 (VB5)

Die blaugrünen Dekore enthielten als Pigment einen Spinell (Nr. 21575 der Cerdec AG) mit d₅₀ = 1,4 µm, d₉₀ = 3,8 µm und der Dichte von 5,2 g/cm³. Die Tabelle enthält die Angaben analog Beispiel 1.

| | | B 5 | VB 5 |
|---|---|---|---|
| PVK (%) | | 10 | 10 |
| Fluß: | Typ | C | G |
| | HKP (°C) | 820 | 940 |
| | Dichte (g/cm³) | 2,53 | 2,51 |
| Spülmaschinenbeständigkeit *) | | 3 / 3 | 2 / 2 |
| Abriebstest *) | | 3 / 3 | 2 / 2 |

| | | | |
|---|---|---|---|
| *) Brand bei 1140 beziehungsweise 1220 °C | | | |

## Patentansprüche

1. Verfahren zur Herstellung von Geschirrdekoren mit erhöhter Widerstandsfähigkeit gegen Besteckabriebsspuren, umfassend Aufbringen einer ein Pigment und einen Glasfluß enthaltenden Dekorfarbe auf das Geschirr und Einbrennen des Dekors bei einer Temperatur im Bereich von 1000 bis 1250 °C,
dadurch gekennzeichnet,
daß man eine Dekorfarbe verwendet, deren Pigment einen mittleren Korndurchmesser d₅₀ von gleich oder kleiner 2 µm und deren Glasfluß eine Dichte von gleich oder kleiner 2,6 g/cm³ und eine Halbkugeltemperatur von kleiner 930 °C aufweist, bestimmt unter dem Erhitzungsmikroskop an einem Prüfkörper aus verpresstem Glasfluss mit einem Durchmesser von 3 mm und einer Höhe von 3 mm bei konstanter Aufheizgeschwindigkeit von 10 °C/min, wobei bei der Halbkugeltemperatur der Radius der Basisfläche des Prüfkörpers seiner Höhe entspricht.

2. Verfahren nach Anspruch 1,
dadurch gekennzeichnet,
daß der Glasfluß eine Halbkugeltemperatur von gleich oder weniger als 880 °C aufweist.

3. Verfahren nach Anspruch 1 oder 2,
dadurch gekennzeichnet,
daß man das Dekor auf glasiertes Porzellan aufträgt und bei einer Temperatur im Bereich von 1100 bis 1250 °C einbrennt.

4. Dekorfarbe zur Herstellung von Geschirrdekoren mit erhöhter Widerstandsfähigkeit gegen Besteckabriebsspuren, enthaltend ein Pigment und einen Glasfluß,
dadurch gekennzeichnet,
daß das Pigment einen mittleren Korndurchmesser d₅₀ von gleich oder kleiner 2 µm und der Glasfluß eine Dichte von gleich oder kleiner 2,6 g/cm³ und eine Halbkugeltemperatur von kleiner 930 °C aufweist.

## Claims

1. A method of producing crockery decorations with elevated resistance to cutlery abrasion, comprising application of a decorative colorant containing a pigment and a glass flux to the crockery and stoving of the decoration at a temperature in the range of from 1000 to 1250 °C,
characterised in that
a decorative colorant is used, the pigment of which exhibits an average grain diameter d₅₀ of equal to or less than 2 µm and the glass flux of which exhibits a density of equal to or less than 2.6 g/cm³ and a hemisphere temperature lower than 930 °C, determined under a hot-stage microscope using a test piece of moulded glass flux with a diameter of 3 mm and a height of 3 mm at a constant heating speed of 10 °C/min, wherein, at the hemisphere temperature, the radius of the base area of the test piece matches the height thereof.

2. A method according to claim 1,
characterised in that
the glass flux exhibits a hemisphere temperature equal to or lower than 880 °C.

3. A method according to claim 1 or claim 2,
characterised in that
the decoration is applied to glazed porcelain and stoved at a temperature in the range of from 1100 to 1250 °C.

4. A decorative colorant for producing crockery decorations with elevated resistance to cutlery abrasion, containing a pigment and a glass flux,
characterised in that
the pigment exhibits an average grain diameter d₅₀ of equal to or less than 2 *µ*m and the glass flux exhibits a density of equal to or less than 2.6g/cm³ and a hemisphere temperature lower than 930 °C.

## Revendications

1. Procédé de production de décors de vaisselle à capacité de résistance accrue aux traces d'usure par des couverts, comprenant le dépôt d'une couleur décorative contenant un pigment et un fluor minéral sur la vaisselle, et la cuisson du décor à une température comprise entre 1000 et 1250°C,
caractérisé en ce qu'
on utilise une couleur décorative dont le pigment présente une granulométrie moyenne d₅₀ égale ou inférieure à 2 µm et dont le fluor minéral présente une densité égale ou inférieure à 2,6 g/cm³ et une température de fusion des cendres inférieure à 930°C, déterminée au microscope à échauffement sur un corps étudié en fluor minéral compacté, d'un diamètre de 3 mm et d'une hauteur de 3 mm, à vitesse de chauffage constante de 10°C/minute, le rayon de la surface de base du corps étudié correspondant à sa hauteur à la température de fusion des cendres.

2. Procédé selon la revendication 1,
caractérisé en ce que
le fluor minéral présente une température de fusion des cendres égale ou inférieure à 880°C.

3. Procédé selon la revendication 1 ou 2,
caractérisé en ce qu'
on apporte le décor sur de la porcelaine vernissée et en ce qu'on le cuit à une température comprise entre 1100 et 1250°C.

4. Colorant décoratif pour la production de décors pour vaisselles à capacité de résistance accrue aux traces d'usure provoquées par les couverts, provoquant un pigment et un fluor minéral,
caractérisé en ce que
le pigment présente une granulométrie moyenne d₅₀ égale ou inférieure à 2 µm et le fluor minéral présente une densité égale ou inférieure à 2,6 g/cm³ et une température de fusion des cendres inférieure à 930°C.
